Europäisches Patentamt

**European Patent Office**

**Office européen des brevets**

(11) Numéro de publication: **0 087 357**
**A2**

# (12) DEMANDE DE BREVET EUROPEEN

(21) Numéro de dépôt: **83400308.9**

(22) Date de dépôt: **14.02.83**

(51) Int. Cl.³: **G 06 F 15/332**

(30) Priorité: **23.02.82 BE 892241**

(43) Date de publication de la demande:
**31.08.83 Bulletin 83/35**

(84) Etats contractants désignés:
**AT CH DE GB IT LI LU NL SE**

(71) Demandeur: **INTERCONTROLE Société Anonyme**
**15, rue des Solets Zone Silic 433**
**F-94583 Rungis Cedex(FR)**

(72) Inventeur: **D'Hondt, Jean-Pierre**
**5 Chaussée de Lille**
**B-7500 Tournai(BE)**

(74) Mandataire: **Mongrédien, André et al,**
**c/o BREVATOME 25, rue de Ponthieu**
**F-75008 Paris(FR)**

(54) **Circuit de calcul rapide de la transformée de Fourier discrète d'un signal, destiné notamment à un appareil de contrôle par courants de Foucault.**

(57) Circuit de calcul rapide de transformée de Fourier discrète.

Ce circuit comprend, un convertisseur analogique-numérique (126), une mémoire vive (128) d'acquisition des échantillons, une mémoire morte (152) contenant les coefficients de la transformation, un compteur (132) adressant les deux mémoires, un multiplieur (160) relié aux deux mémoires, un accumulateur (170) et un séquenceur pour commander le tout.

Application à la réalisation d'appareils pour le contrôle non destructif par courants de Foucault.

EP 0 087 357 A2

./...

FIG. 3

La présente invention a pour objet un circuit de calcul rapide de la transformée de Fourier discrète d'un signal. Elle trouve une application dans l'analyse de signaux de mesure, notamment dans l'analyse de la tension délivrée par une sonde de contrôle non destructif par courants de Foucault.

On sait que ce type de contrôle consiste à créer un champ magnétique variable à l'aide d'un enroulement primaire, à soumettre une pièce à contrôler à ce champ et à prélever aux bornes d'un enroulement secondaire disposé à proximité de la pièce contrôlée une tension et à analyser celle-ci. Les enroulements primaire et secondaire sont disposés dans une sonde dont la structure peut prendre différentes formes (ils peuvent être confondus, disposés en pont etc...). Tout défaut de la pièce contrôlée (changement de dimension, variation de conductivité électrique, variation de perméabilité magnétique, criques, etc...) modifie la phase et l'intensité des courants de Foucault induits dans la pièce et, corrélativement, change la tension prélevée aux bornes de la sonde.

Lorsque la pièce à contrôler est magnétique, il apparaît une difficulté particulière qui tient à la forte perméabilité du matériau. Celle-ci entraîne en effet une dépendance du signal de mesure vis-à-vis de certains paramètres comme les dimensions, le poids...

Dans le cas du contrôle de pièces magnétiques, le traitement du signal de mesure consiste es-

B 7427   RS

sentiellement dans la détermination des harmoniques de ce signal. Autrement dit, il s'agit d'une transformation de Fourier. Il a été montré en effet que la connaissance des harmoniques du signal permet d'éviter l'inconvénient mentionné plus haut en ce qui concerne la dépendance de la mesure vis-à-vis de certains paramètres. C'est ainsi que l'amplitude de l'harmonique 3, qui reflète assez bien la structure de la pièce, mais qui demeure sensible au poids de la pièce, peut être pondéré par la phase ou l'amplitude du terme fondamental qui est fonction justement du poids de la pièce, pour obtenir un résultat sensiblement indépendant du poids. D'autres combinaisons entre harmoniques permettent de s'affranchir d'autres paramètres. On sait par ailleurs que la première composante harmonique joue un rôle privilégié. Elle peut être représentée, dans un plan d'impédance par un point qui, en cas de défilement de la pièce dans un capteur dit "différentiel", décrit une courbe en forme de 8 dont l'amplitude et l'orientation permettent de déterminer les défauts de la pièce contrôlée.

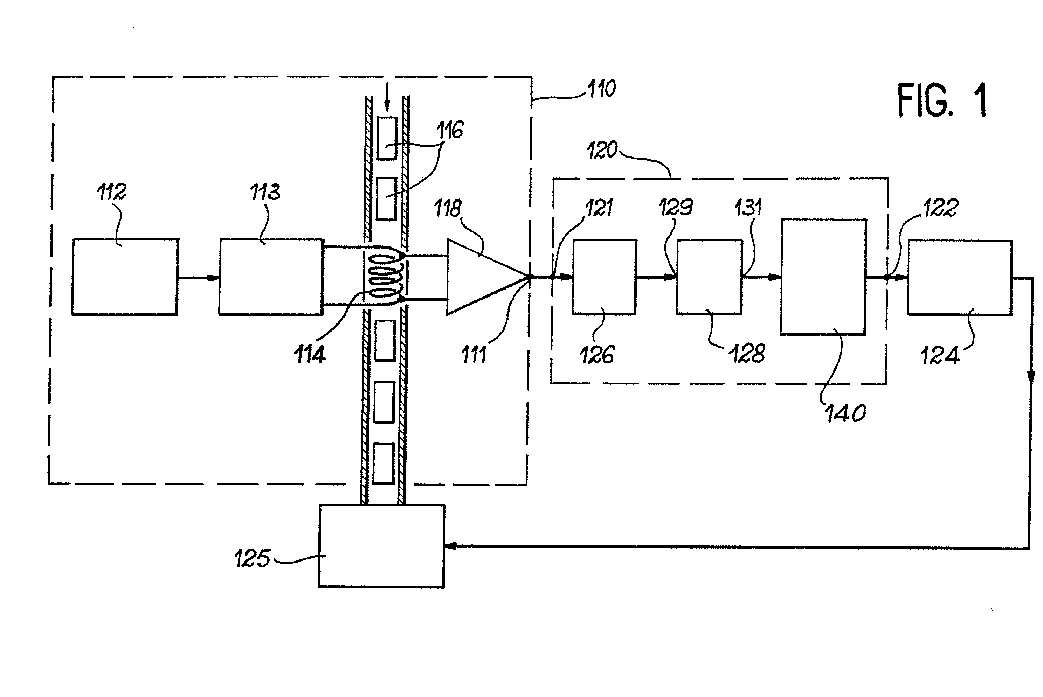

D'une façon générale, le circuit de l'invention s'utilise à la sortie d'un appareil de mesure comme illustré sur la figure 1. Un appareil de mesure quelconque 110 délivre, sur une sortie 111, un signal de mesure analogique. Un circuit 120 de traitement de signal possède une entrée 121 qui est reliée à la sortie 111, et une sortie 122 qui délivre des informations relatives aux harmoniques du signal de mesure. La présente invention se place de préférence dans le contexte du contrôle non destructif par courants de Foucault. Dans ce cas, l'appa-

B 7427    RS

reil 110 comprend un générateur de courant alternatif 112 suivi d'un circuit amplificateur 113 alimentant une sonde 114. Les pièces à contrôler 116 défilent à proximité de la sonde 114. Le signal de mesure prélevé par la sonde est amplifié par un circuit 118 et apparaît sur la sortie 111. C'est ce signal qui est appliqué au circuit d'analyse 120. Un circuit 124 d'exploitation des résultats peut compléter le circuit d'analyse afin d'agir sur un organe de tri 125 apte, par exemple, à éjecter les pièces défectueuses.

Le circuit d'analyse 120 effectue une transformation de Fourier du signal qui lui est appliqué. Bien que des circuits d'analyse de type analogique soient possibles, on préfère aujourd'hui travailler en numérique, ce qui permet une meilleure précision et une plus grande souplesse d'analyse. Les signaux à traiter sont donc d'abord convertis en échantillons numériques puis font l'objet de la transformation en question. Comme cette opération ne s'effectue plus sur une grandeur continue, mais sur des suites d'échantillons, elle est traditionnellement dénommée transformation de Fourier "discrète", ou en abrégé TFD (en terminologie anglosaxonne DFT pour "Discrete Fourier Transform").

La figure 1 illustre, dans le bloc 120, le schéma synoptique d'un circuit d'analyse de ce type. Un tel circuit comprend :
- un convertisseur analogique-numérique 126,
- une mémoire vive 128 qui sera dite, par la suite, mémoire d'acquisition et qui est du type à accès direct (en abrégé "RAM" pour "Random Access Memory), cette mémoire possédant une entrée de données 129 reliée au convertisseur 126 et une sortie 131,

B 7427   RS

- un ensemble 140 apte à effectuer une transformation de Fourier discrète sur les échantillons contenus dans la mémoire 28 ; cette transformation permet de déterminer la partie réelle R et la partie imaginaire I des harmoniques du signal.

Pour comprendre l'originalité de l'invention, un bref rappel est nécessaire à propos de la transformation de Fourier discrète.

Il s'agit de calculer une composante harmonique notée $X_k$ où k est le rang de l'harmonique considérée, à partir d'une suite d'échantillons notés x(n), où $\underline{n}$ désigne le rang de l'échantillon dans la suite ; ce rang va de 0 pour le premier échantillon à N-1 pour le dernier. L'harmonique de rang $\underline{k}$ est donnée par l'expression classique :

$$X_k = \frac{1}{N} \sum_{n=0}^{N-1} x(n) \cdot \exp\left(-j\,\frac{2\pi nk}{N}\right)$$

où N désigne le nombre d'échantillons servant au calcul, la lettre $\underline{j}$ étant le symbole des imaginaires. En développant la fonction exponentielle, il vient :

$$X_k = \frac{1}{N} \sum_{n=0}^{N-1} x(n) \left[\cos\frac{2\pi nk}{N} + j\,\sin\frac{2\pi nk}{N}\right]$$

expression qui permet de séparer les parties réelles $R_k$ et imaginaires $I_k$ de l'harmonique de rang $\underline{k}$ :

$$R_k = \frac{1}{N} \sum_{n=0}^{N-1} x(n)\,\cos\frac{2\pi nk}{N}$$

$$I_k = \frac{1}{N} \sum_{n=0}^{N-1} x(n)\,\sin\frac{2\pi nk}{N}$$

De la connaissance de $R_k$ et $I_k$ peuvent être tirées l'amplitude A et la phase $\varphi$ de l'harmonique considérée :

$$A = \sqrt{R^2 + I^2}$$

$$\varphi = \text{arctg } \frac{I}{R}$$

Le calcul de R et celui de I nécessitent chacun N multiplications, puisqu'il faut prendre un à un les N échantillons. Il faut donc effectuer 2N multiplications par harmonique. Comme on peut calculer N harmoniques avec une suite de N échantillons, une transformation de Fourier discrète totale requiert donc $2N^2$ multiplications.

Il est clair que ce nombre devient très important lorsque N est grand. Pour 512 échantillons, par exemple, il est égal à 524 288. Le temps de calcul devient alors prohibitif et l'appareil de contrôle ne peut fonctionner en temps réel.

C'est la raison pour laquelle aucun appareil rapide de contrôle par courants de Foucault basé sur la transformation de Fourier discrète, n'utilise en fait les règles de calcul énoncées plus haut, qui constituent davantage des définitions théoriques des quantités à calculer que des principes de fonctionnement des circuits utilisés. Les appareils à hautes performances mettent en oeuvre des algorithmes plus élaborés qui ont été imaginés justement pour réduire le temps de calcul. La transformation entreprise est alors dite "rapide" ou TFR en abrégé ("FFT" en terminologie anglosaxonne, pour "Fast Fourier Transform").

Les algorithmes mis en oeuvre sont connus et il n'est pas besoin de les rappeler ici (algorithme de COOLEY, de SANDE, etc...). Il suffit de dire qu'ils font appel à des factorisations de matrices, faisant intervenir des coefficients intermédiaires entre le signal et sa transformée. Le calcul se dé-

B 7427    RS

roule donc par étages, le premier partant des N échantillons et le dernier aboutissant aux N composantes harmoniques. On peut montrer alors que le nombre d'opérations accomplies dans ces algorithmes est effectivement réduit et passe de $2N^2$ à $2N\log_2 N$. Pour N=512, ce nombre est égal à 13 824, à comparer à 524 288 avec les règles précédentes.

Le but de la présente invention est d'accélérer encore le calcul des harmoniques. Pour cela, et tout à fait paradoxalement, l'invention renonce à la transformation de Fourier rapide qui vient d'être évoquée pour retenir le processus élémentaire mentionné plus haut et qui est réputé inapproprié. L'invention va donc à l'encontre des préjugés actuels dans le domaine qui préconisent toujours la recherche d'algorithmes rapides avec passage par des états intermédiaires.

L'invention résulte d'une analyse fine effectuée par les inventeurs sur le caractère spécifique que présente la transformation de Fourier discrète dans le cas du contrôle non destructif par courants de Foucault. La particularité que présente cette technique est de ne requérir, en fait, que les premières harmoniques du signal et non la totalité des N harmoniques que donne la transformation de Fourier rapide usuelle. La question qui se pose est donc celle de savoir combien d'opérations nécessite la transformation de Fourier rapide lorsqu'on limite le développement aux premières harmoniques.

Une étude détaillée des algorithmes généralement utilisés, étude qui sortirait du cadre de la présente demande, montre que, dans le cas où le nombre d'échantillons N est égal à une puissance de 2 ($N = 2^b$), pour obtenir les h premières harmoniques avec un algorithme de TFR, il faut réaliser un nombre d'opérations égal à :

7

0087357

$$\sum_{i=0}^{b} \left| h \cdot 2^i \right| \quad \text{limité à N}$$

expression dans laquelle $i$ représente le nombre d'étages utilisés dans l'algorithme rapide, la quantité $h.2^i$ devant être limitée à la valeur N.

Pour h=3, c'est-à-dire lorsqu'on ne s'intéresse qu'à 3 harmoniques, la transformation de Fourier rapide nécessite alors 3795 opérations. Or les simples opérations de produits directs des échantillons par les coefficients en sinus et cosinus, nécessitent 3x2x512=3072 opérations, ce qui est inférieur. D'où ce résultat surprenant que l'algorithme de simple multiplication est plus rapide que les algorithmes de transformation rapide dans cette situation particulière.

La première idée inventive à la base de la présente invention est donc de travailler réellement sur les expressions suivantes :

$$R_k = \frac{1}{N} \sum_{n=0}^{N-1} x(n) \cos\frac{2\pi nk}{N}$$

$$I_k = \frac{1}{N} \sum_{n=0}^{N-1} x(n) \sin\frac{2\pi nk}{N}$$

c'est-à-dire d'effectuer réellement des produits d'échantillons $x(n)$ par des coefficients $\cos\frac{2\pi nk}{N}$ et $\sin\frac{2\pi nk}{N}$ et d'effectuer des sommes sur les produits obtenus.

Ces opérations pourraient être effectuées à l'aide d'un programme d'instructions portant sur des multiplications (pour obtenir les produits en question) et des additions (pour faire la somme des produits obtenus). Mais, et toujours pour des raisons de rapidité, l'invention préconise une autre

B 7427   RS

solution qui est l'emploi d'un circuit câblé particulier, essentiellement constitué par un multiplieur suivi d'un accumulateur. L'intérêt d'une telle solution est de pouvoir utiliser des circuits fonctionnant en logique câblée, qui sont beaucoup plus rapides que les circuits à programmes. Le temps de calcul de ces circuits peut être de l'ordre de la centaine de nanosecondes.

Un intérêt supplémentaire de l'invention est de pouvoir utiliser certains circuits que l'on trouve aujourd'hui dans le commerce et qui sont capables d'effectuer à la fois des multiplications, des additions et une accumulation, en un temps très bref.

Quant aux coefficients en sinus et en cosinus nécessaires aux calculs, ils pourraient être engendrés par programme. L'invention préfère encore avoir recours à un circuit, en l'occurrence à une mémoire, où sont stockés tous les coefficients utiles. Cette mémoire est du type mémoire morte programmable (en abrégé PROM pour "Programmable Read Only Memory"). Elle est partagée en autant de blocs qu'il y a de composantes harmoniques à calculer, le bloc de rang $\underline{k}$ contenant les coefficients d'indice $\underline{k}$ nécessaires au calcul de la $k^{\text{ième}}$ harmonique.

Enfin, l'adressage des deux mémoires où sont stockés les échantillons et les coefficients pourrait s'effectuer par instructions provenant d'un microprocesseur de commande. Cette solution nécessiterait environ 100 µs de préparation et ruinerait l'avantage d'utiliser un multiplieur travaillant en 100 ns. Selon l'invention, au contraire, la lecture des deux mémoires s'effectue à l'aide d'un même compteur qui délivre très rapidement les adresses successives des échantillons et des coefficients.

Ainsi, toute la structure du calculateur de l'invention est-elle déterminée par le souci d'obtenir une grande rapidité de calcul et cela en dépit de l'apparente lenteur du processus de calcul retenu.

De façon précise, la présente invention a donc pour objet un circuit de calcul rapide de la transformée de Fourier discrète d'un signal délivré par un appareil de mesure, notamment par un appareil de contrôle non destructif par courants de Foucault, ce circuit comprenant :

- un convertisseur analogique-numérique possédant une entrée qui reçoit le signal à traiter et une sortie qui délivre des échantillons numériques,
- une mémoire du type à accès direct, dite mémoire d'acquisition, possédant une entrée de données qui est reliée à la sortie du convertisseur, une entrée d'adressage et une sortie de données,
- un ensemble de calcul de la transformée de Fourier discrète, possédant une entrée reliée à la sortie de la mémoire d'acquisition et une sortie délivrant la partie réelle et la partie imaginaire des harmoniques du signal ;

ce circuit est caractérisé en ce que l'ensemble de calcul de la transformée de Fourier discrète comprend :

- une mémoire morte de type programmable, dite mémoire de coefficients, à une entrée d'adressage et une sortie de données, cette mémoire étant partagée en autant de blocs que d'harmoniques à calculer, le $k^{\text{ème}}$ bloc contenant les coefficents $\sin\frac{2\pi nk}{N}$ et $\cos\frac{2\pi nk}{N}$ où $N$ est le nombre d'échantillons contenus dans la mémoire d'acquisition et où $\underline{n}$ prend toutes les valeurs allant de 0 à $N-1$,

B 7427   RS

- un compteur possédant deux sorties véhiculant deux jeux d'adresses, la première sortie étant reliée à l'entrée d'adressage de la mémoire d'acquisition et la seconde à l'entrée d'adressage de la mémoire de coefficients, ces adresses correspondant respectivement aux échantillons de la mémoire d'acquisition et aux coefficients d'un bloc de la mémoire de coefficients,

- un circuit multiplieur possédant deux entrées, l'une reliée à la sortie de la mémoire d'acquisition, l'autre à la sortie de la mémoire de coefficients, et une sortie,

- un circuit accumulateur possédant une entrée reliée à la sortie du multiplieur et une sortie véhiculant les parties réelles et imaginaires recherchées,

- un circuit séquenceur apte à transmettre des impulsions au compteur, à commander la lecture des échantillons dans la mémoire d'acquisition et, simultanément, la lecture dans le premier bloc de la mémoire de coefficients des coefficients $\cos\frac{2\pi n}{N}$ puis à commander à nouveau la lecture des échantillons dans la mémoire d'acquisition et simultanément la lecture dans le même premier bloc de la mémoire de coefficients des coefficients $\sin\frac{2\pi n}{N}$ et, à chaque lecture d'un échantillon et d'un coefficient, à commander le multiplieur puis l'accumulateur, et à réitérer ces opérations avec le deuxième bloc de la mémoire de coefficients et ainsi de suite jusqu'au dernier.

De toute façon, les caractéristiques de l'invention apparaîtront mieux après la description qui suit, d'exemples de réalisation donnés à titre explicatif et nullement limitatif. Cette description se réfère à des dessins annexés, qui comprennent la figure 1 déjà décrite, et en outre :

- la figure 2 qui représente le schéma synoptique du circuit de calcul de l'invention,

- la figure 3 qui est un schéma général d'une variante de réalisation,

- la figure 4 qui illustre un mode particulier de réalisation d'un compteur d'adressage et d'une mémoire de coefficients,

- la figure 5 qui illustre un mode particulier de réalisation d'une mémoire d'acquisition,

- la figure 6 qui illustre un mode particulier de réalisation de circuit de calcul et de ses circuits d'entrée-sortie associés.

L'invention peut s'appliquer chaque fois que l'on désire calculer rapidement les premières composantes harmoniques d'un signal de mesure. C'est toutefois dans le cas du contrôle non destructif par courants de Foucault qu'elle trouve une application privilégiée, comme expliqué plus haut et c'est la raison pour laquelle la description qui va suivre s'appuie sur cet exemple.

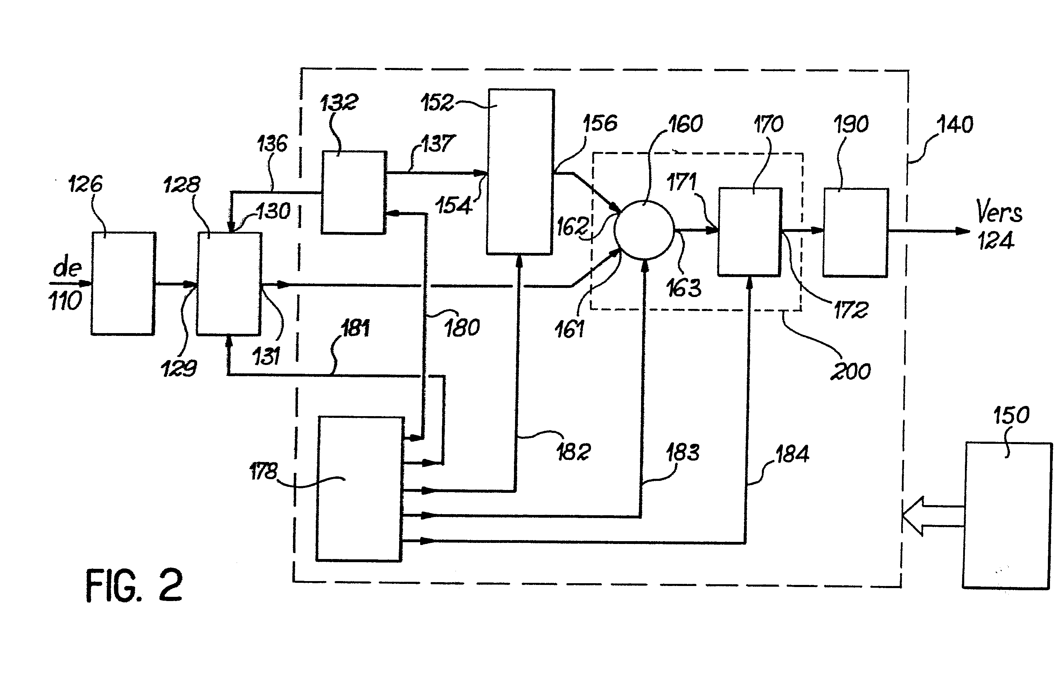

Le schéma général du circuit de l'invention est illustré sur la figure 2 où l'on reconnaît des éléments déjà représentés sur la figure précédente, à savoir le convertisseur analogique-numérique 126, et la mémoire d'acquisition 118. La figure 2 illustre plus spécialement la structure de l'ensemble 140 qui permet de calculer les parties réelles et imaginaires des premières harmoniques, à partir des N échantillons stockés dans la mémoire d'acquisition 128.

Tel que représenté, cet ensemble 140 comprend essentiellement une mémoire morte 152, un compteur 132, un multiplieur 160, un accumulateur 170 et un séquenceur 178. Ces différents éléments vont être décrits en détail.

La mémoire morte 152 est de type PROM. Elle possède une entrée d'adressage 154 et une sortie de données 156. Cette mémoire est partagée en autant de blocs que d'harmoniques à calculer (dans l'exemple pris en trois blocs). Le $k^{ème}$ bloc contient les coefficients $\sin\frac{2\pi nk}{N}$ et $\cos\frac{2\pi nk}{N}$ où N est le nombre d'échantillons contenus dans la mémoire d'acquisition 128 et où $\underline{n}$ prend toutes les valeurs allant de 0 à N-1. Dans le premier bloc, on trouve donc les coefficients $\sin\frac{2\pi n}{N}$ et $\cos\frac{2\pi n}{N}$, dans le deuxième les coefficients $\sin\frac{4\pi n}{N}$ et $\cos\frac{4\pi n}{N}$ et dans le troisième les coefficients $\sin\frac{6\pi n}{N}$ et $\cos\frac{6\pi n}{N}$.

Le compteur 132 possède deux sorties véhiculant chacune un jeu d'adresses : la première sortie 136 est reliée à une entrée d'adressage 130 de la mémoire d'acquisition 128 et la seconde, 137, à l'entrée d'adressage 154 de la mémoire de coefficients 152. Les adresses délivrées par le compteur 132 déterminent respectivement un échantillon dans la mémoire d'acquisition 128 et un coefficient dans un des blocs de la mémoire de coefficients 132. Pour N=512, il faut des adresses à 9 éléments binaires ou bits ($2^9$=512). Pour sélectionner un bloc parmi trois, il faut encore 2 bits d'adressage et pour sélectionner, soit la série en sinus, soit la série en cosinus, il faut encore 1 bit d'adressage, soit au total, 9+2+1=12 bits pour l'adressage de la mémoire 152.

Le circuit multiplieur 160 possède deux entrées, 161 et 162, la première reliée à la sortie 131 de la mémoire d'acquisition 128, la seconde à la sortie 156 de la mémoire de coefficients 152. Le multiplieur possède également une sortie 163.

Le circuit accumulateur 170 possède une entrée 171 qui est reliée à la sortie 163 du multi-

B 7427   RS

plieur 160 et une sortie 172 qui véhicule les parties réelles et imaginaires des harmoniques recherchées.

Le circuit séquenceur 178 est relié par une connexion 180 au compteur, par une connexion 181 à la mémoire d'acquisition 128, par une connexion 182 à la mémoire de coefficients 152, par une connexion 183 au multiplieur 160 et par une connexion 184 à l'accumulateur 170.

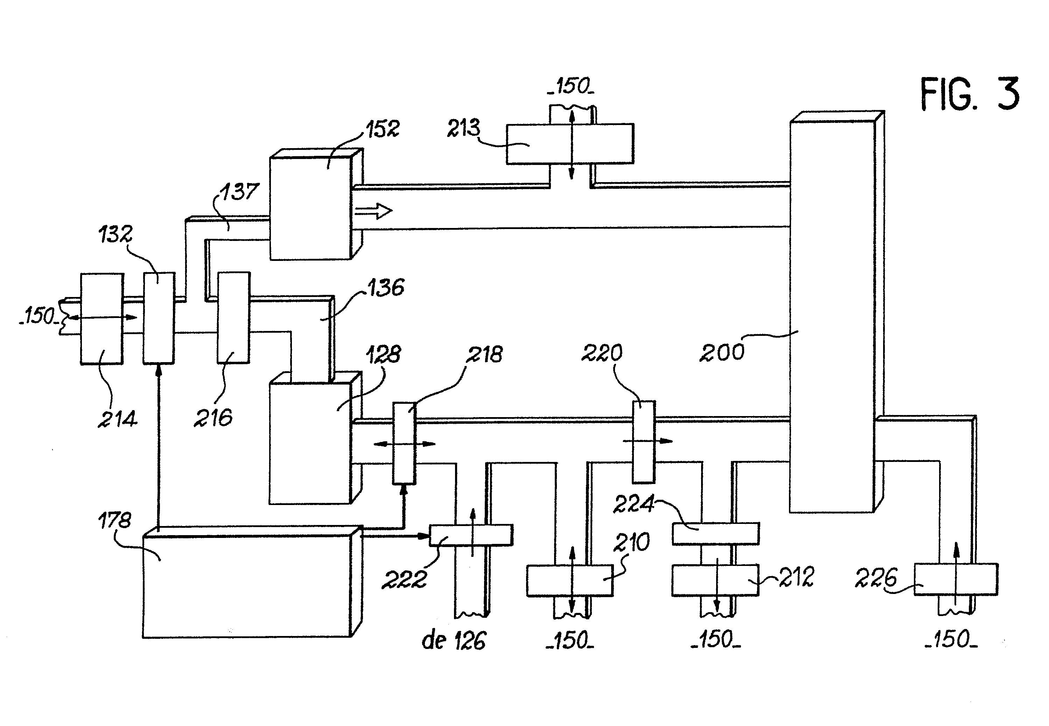

L'ensemble représenté comprend encore un microprocesseur 150 qui est relié à tous les éléments mentionnés plus haut (par des connexions non représentées sur la figure 3 par simplification, mais qui apparaîtront sur les figures suivantes).

Le circuit séquenceur 178 adresse au compteur 132 des impulsions de comptage par la connexion 180. Par la connexion 181, il commande la lecture dans la mémoire d'acquisition 128, et simultanément, la lecture des coefficients dans la mémoire 152.

La lecture des échantillons et des coefficients dans leurs mémoires respectives est obtenue grâce au compteur 132 dont le contenu évolue de 0 à 511 sous la commande des impulsions qu'il reçoit du séquenceur.

Le séquenceur commande d'abord la lecture des échantillons en cosinus. A chaque impulsion un échantillon et un coefficient en cosinus se présentent simultanément sur les entrées 161 et 162 du multiplieur. Le séquenceur commande alors, par la connexion 183, au multiplieur 160 d'effectuer le produit des deux données. Puis, par la connexion 184, le séquenceur commande l'accumulateur 170, qui prend en compte le produit partiel délivré par le multiplieur.

A l'impulsion suivante adressée au compteur, un nouvel échantillon se présente à l'entrée

14 0087357

du multiplieur et un nouveau coefficient en cosinus. Les opérations de multiplication et d'accumulation se reproduisent.

Après 512 cycles de ce genre, le séquenceur signale au microprocesseur 150 qu'un calcul complet vient d'être effectué et que l'on dispose en sortie 172 de l'accumulateur 170 de la partie réelle de la première harmonique. Le microprocesseur 150 lit alors le résultat et ordonne au séquenceur de procéder à la séquence suivante permettant d'obtenir la partie imaginaire.

Pour cela, le séquenceur sélectionne, par un signal approprié véhiculé par la connexion 182, la suite des coefficients en sinus, toujours dans le premier bloc de la mémoire de coefficients. Après 512 nouvelles opérations de lecture-multiplication et accumulation, l'accumulateur délivre la partie imaginaire de la première harmonique. Le microprocesseur 150 vient lire ce résultat et ordonne au séquenceur de procéder à la phase de calcul de la seconde harmonique.

C'est alors la lecture du deuxième bloc de la mémoire de coefficients 152 qui est adressée et les deux séquences de calcul se reproduisent.

Enfin, le troisième bloc de la mémoire 152 est adressé, ce qui permet d'obtenir les parties réelles et imaginaires de la troisième harmonique.

Dans certains cas, il est souhaitable de calculer l'amplitude et la phase de chaque harmonique. Plutôt que d'utiliser le microprocesseur 150 à l'aide de routines de calcul, ce qui allongerait la durée des calculs, l'invention préconise l'emploi d'un microprocesseur auxiliaire référencé 190 sur la figure 2 et qui, compte tenu de la tâche particulière qui lui incombe, peut être câblé et être, par

B 7427 RS

conséquent, très rapide. Il s'agit d'un microprocesseur dit "mathématique" apte à effectuer les opérations d'élévation au carré (pour obtenir $R^2$ et $I^2$), d'addition (pour obtenir $R^2+I^2$), d'extraction de racine carrée (pour obtenir le module de l'harmonique), de calcul d'un quotient (de I par R) et de calcul de l'arctangente du quotient obtenu (pour obtenir l'argument de l'harmonique considérée).

La connaissance des trois harmoniques, par leur amplitude et leur phase, permet, grâce à des algorithmes appropriés, d'obtenir les combinaisons évoquées plus haut traduisant la qualité de la pièce contrôlée.

Naturellement, les moyens situés en aval de la sortie 172 de l'accumulateur dépendent de l'application envisagée et pourraient être différents de ceux qui viennent d'être décrits.

Dans la pratique, il est possible de rassembler le circuit multiplieur 160 et l'accumulateur 170 sur un seul et même circuit intégré représenté symboliquement par le bloc 200. De tels circuits existent dans le commerce. Il peut s'agir, par exemple, du circuit TDC 1010J commercialisé par la Société américaine TRW. Un des intérêts de l'invention est justement de permettre l'utilisation de tels circuits à performances élevées, notamment en ce qui concerne la vitesse de calcul.

Le microprocesseur central 150 est en liaison avec la mémoire d'acquisition 128, la mémoire de coefficients 152, le multiplieur 160 et l'accumulateur 170, afin qu'il soit possible d'utiliser ces composants pour d'autres tâches que celles requises par l'analyse harmonique décrite plus haut. Ces liaisons apparaissent mieux sur la figure 3 où sont représentés des groupes de connexions ou bus,

B 7427    RS

avec les circuits interfaces nécessaires.

Sur cette figure sont représentés : un circuit interface 210 permettant au microprocesseur d'écrire et de lire dans la mémoire d'acquisition 128, un circuit interface 212 permettant au microprocesseur de lire les résultats de calcul dans le circuit 200, un autre circuit interface 213 donnant accès à la mémoire de coefficients 152, un circuit interface 214 qui donne accès au compteur 132, un circuit de verrouillage 216 (circuit "latch" en anglosaxon, qui est transparent vis-à-vis du signal qui lui est appliqué ou qui mémorise celui-ci), des circuits tampon bidirectionnels 218 et 220 disposés à la sortie de la mémoire 128 et à l'entrée du circuit 200, un circuit tampon unidirectionnel 222 disposé sur le bus de données provenant du convertisseur 126 et permettant l'écriture des données dans la mémoire 128, un circuit tampon unidirectionnel 224 disposé sur le bus et donnant au microprocesseur accès au circuit de calcul 200, enfin, un circuit interface 226 permettant l'introduction par le microprocesseur d'ordres de commande et de données dans le circuit 200.

L'intérêt de permettre au microprocesseur de pouvoir lire dans les mémoires est qu'il devient possible de choisir dans celles-ci un jeu de coefficients ou d'échantillons parmi plusieurs. Il est possible en particulier de stocker un jeu pondéré de coefficients ou d'échantillons, la pondération étant choisie pour compenser les effets de la limitation imposée au signal de mesure (limitation à $N$ échantillons), cette limitation artificielle pouvant répondre par ailleurs à certains critères connus (fonction de Hamming, etc...). Le microprocesseur détermine alors quel jeu est le mieux approprié au problème à résoudre.

En outre, l'accès au compteur 132 permet de charger celui-ci à un contenu initial choisi.

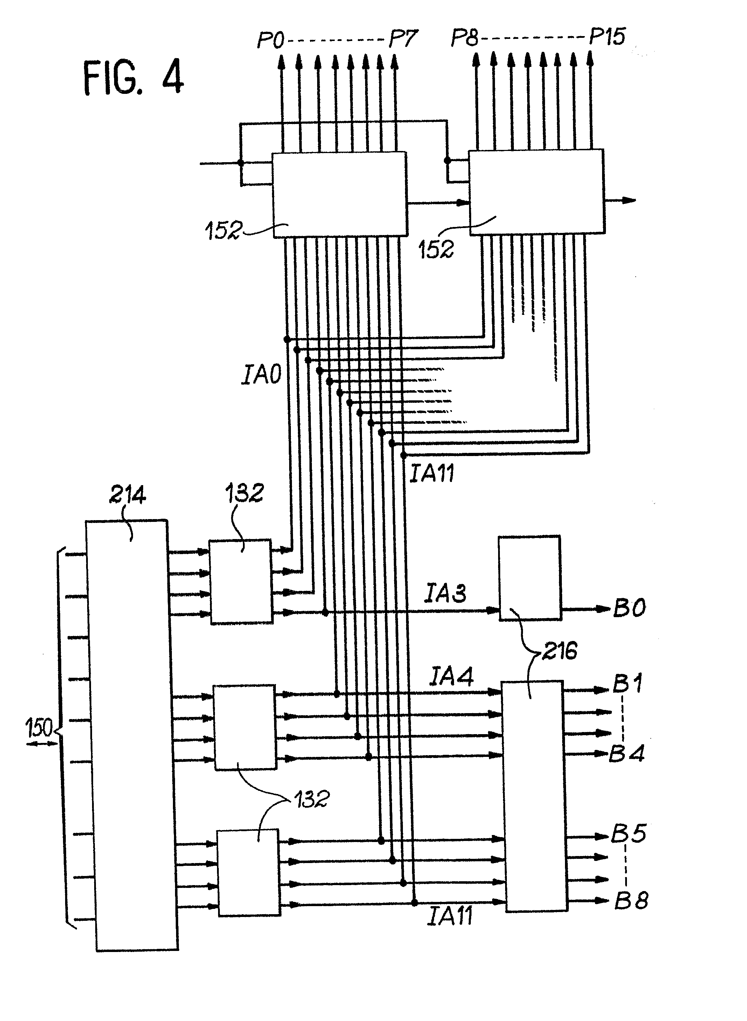

Les figures 4 à 6 illustrent de façon plus concrète des modes particuliers de réalisation du circuit de l'invention dans le cas particulier suivant : les calculs s'effectuent avec 512 échantillons ; le circuit 200 de multiplication-accumulation fonctionne avec des nombres de 16 éléments binaires (ou bits) ; le résultat est donné avec 35 bits ; la mémoire d'acquisition travaille avec des mots de 12 bits et la mémoire de coefficients avec des mots de 15 bits (on pourrait en toute rigueur utiliser des mots de 16 bits puisque le circuit 200 les accepte, mais il y aurait des risques de dépassement dans l'accumulateur).

La figure 4, tout d'abord, montre le circuit interface 214 (qui est par exemple du type 8255) suivi du compteur 132 formé par trois compteurs partiels à 4 sorties (par exemple du type 74 LS 191), soit au total 3x4=12 connexions d'adresses notées IA0, IA1,..., IA11. Ces 12 connexions sont dirigées, d'une part, directement vers la mémoire de coefficients 152 et, d'autre part, pour ce qui est des 9 connexions IA3 à IA11, vers la mémoire d'acquisition par l'intermédiaire du circuit de verrouillage ("latch") 216 (constitué par exemple par un circuit 74 LS 373 pour les huit dernières connexions IA4 à IA11 et un circuit 74 LS 75 pour la connexion IA3). Les 9 sorties d'adressage destinées à la mémoire d'acquisition sont référencées B0, B1,... B8. La mémoire de coefficients 152 peut être composée de deux circuits mémoire (par exemple de type 2732) adressés chacun par les 12 connexions IA0 à IA11. Les 12 bits d'adressage se répartissent en deux bits définissant l'un des trois blocs de coefficients, 1 bit définissant la suite en cosinus ou en sinus dans le bloc choisi, et 9 bits définissant un coefficient parmi 512 dans la suite choisie. La mémoire délivre des mots de 2x8=16 bits dont 15 seulement sont utilisés. Les connexions de sortie sont référencées P0 à P15.

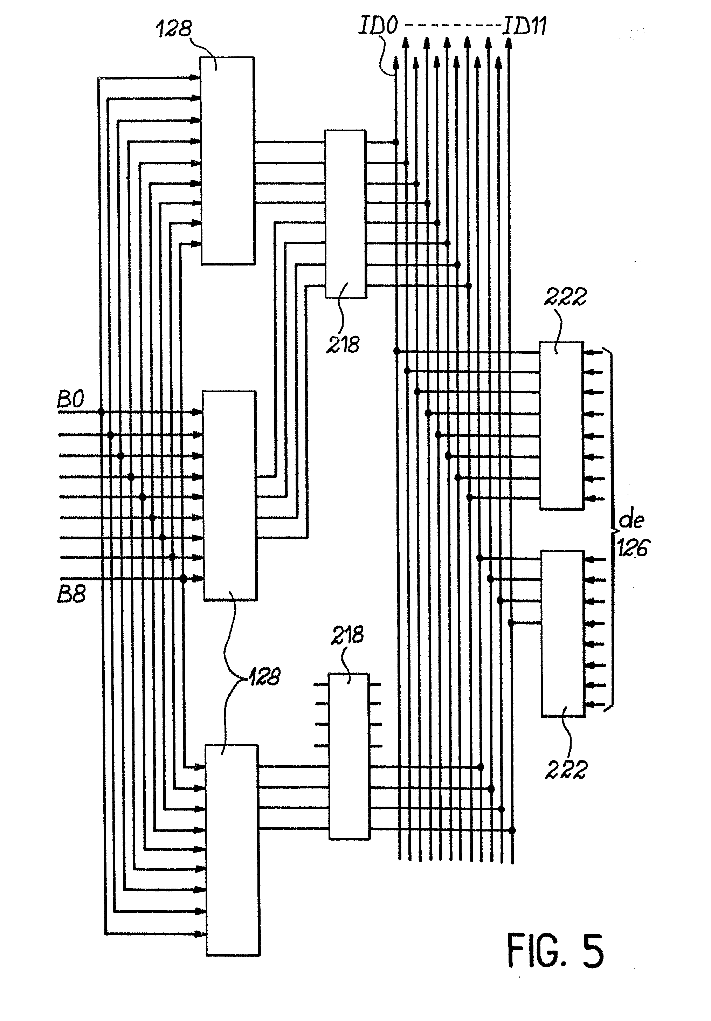

La figure 5 représente l'environnement de la mémoire d'acquisition 128 dans une réalisation qui utilise trois circuits de mémorisation (par exemple de type 2114) à 4 sorties chacun. Cette mémoire est adressée par les 9 entrées B0, B1,..., B8. Les 3x4=12 entrées-sorties sont reliées à un circuit tampon 218 formé de circuits bidirectionnels (un type 8286 à 4 entrées-sorties et un de type 81LS95 à 8 entrées-sorties). La sortie des échantillons lus s'effectue par les 12 sorties ID0, ID1,..., ID11.

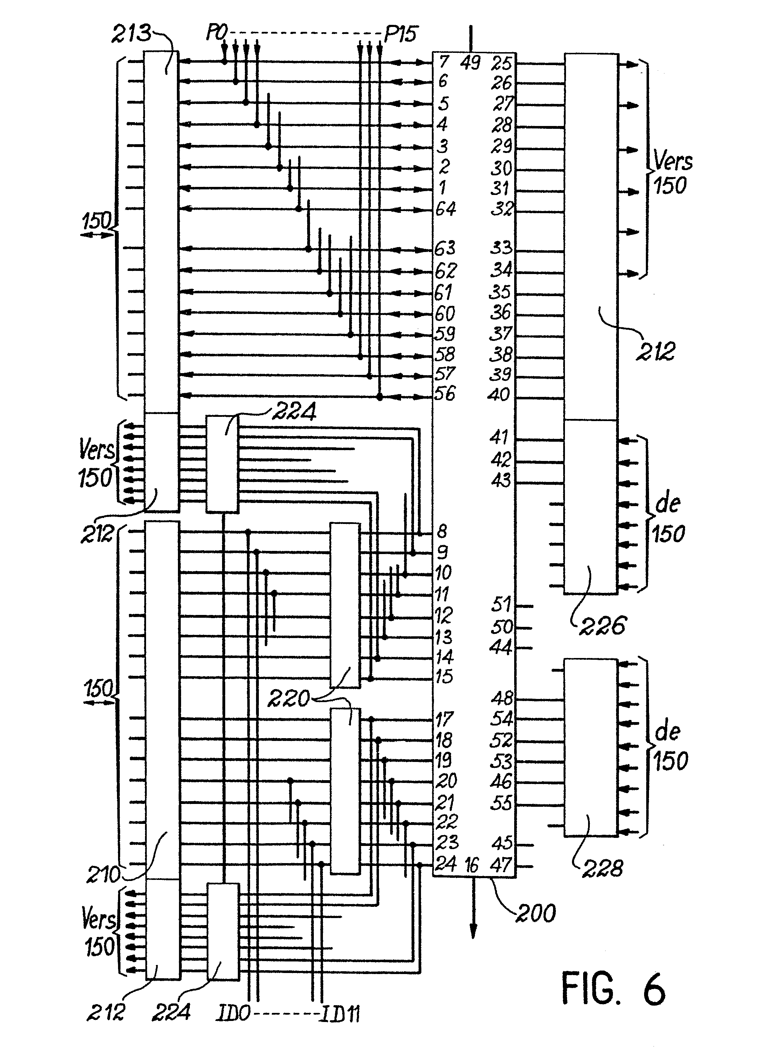

La figure 6 représente le circuit de calcul 200 et ses entrées-sorties. Ce circuit, qui est la pièce maîtresse de l'ensemble, est par exemple constitué par le circuit TDC 1010J de TRW. Ce circuit comprend 64 accès référencés de 1 à 64. Les accès 1 à 7 et 56 à 64 fonctionnent, soit en entrées, auquel cas ils reçoivent les coefficients par les connexions P0,...,P15, soit en sorties, auquel cas ils délivrent les bits de poids fort du résultat au circuit interface 213 relié au microprocesseur. Les accès 8 à 15 et 17 à 24 fonctionnent eux aussi en entrées ou en sortie. En entrées ils reçoivent les échantillons, par les connexions ID0,...,ID11 à travers le circuit tampon 220 (lequel peut être constitué par deux circuits types 81 LS 95). En sortie ils délivrent les bits de poids faible du résultat à travers le tampon 224 puis à travers l'interface 212 au microprocesseur. Les autres accès (côté droit) permettent au microprocesseur d'accéder aux composants du circuit 200. Tous les circuits interface peuvent être de type 8255.

Le séquenceur n'est pas représenté car il s'agit d'un circuit connu. Il comprend un oscillateur à haute stabilité (à quartz) suivi de diviseurs permettant d'engendrer des impulsions à diverses fréquences. L'oscillateur peut être un circuit 74 LS 124 et les diviseurs des circuits 74 LS 123.

Quant au convertisseur analogique-numérique, il fonctionne également avec 512 échantillons par période, sur 12 bits. Pour une fréquence de travail comprise entre 3 et 3000 Hz, cette conversion peut poser des problèmes en haut de gamme, car il faut alors convertir 3000x512 échantillons par seconde. Il est possible de résoudre cette difficulté en prélevant les échantillons non plus sur une seule période, mais sur plusieurs, ce qui est possible puisque le signal est périodique. Le nombre de périodes servant à la conversion peut être programmé et déterminé par le microprocesseur.

La nature numérique de la structure qui vient d'être décrite, sa rapidité et son caractère informatisé, donnent à l'appareil de contrôle qui l'utilise une grande souplesse d'emploi. Un large éventail de possibilités lui est offert :

- il est possible, pour chaque pièce contrôlée, de représenter les parties réelles et imaginaires d'une harmonique par un point de coordonnées R et I dans un plan d'impédance et d'accumuler les points pour les différentes pièces contrôlées ; il est alors possible de faire apparaître une tendance pour la qualité des objets contrôlés tout au cours d'une fabrication,

- un traitement de l'affichage peut être obtenu aisément par déplacement, suppression, rappel de points, etc...,

- lorsque la ou les harmoniques sont traitées à travers leur amplitude et leur phase, il est possible d'enregistrer numériquement ces deux grandeurs, ou de les représenter graphiquement,
- lorsqu'un algorithme de tri particulier a été mis en oeuvre, le résultat peut être affiché et localisé dans une fourchette de tolérance,
- chaque résultat affiché peut être affecté d'un numéro permettant l'identification des pièces,
- le microprocesseur assiste l'opérateur dans son travail par le rappel des limites à ne pas dépasser, par des contrôles de sécurité, etc...,
- une imprimante peut être reliée à l'appareil pour éditer un journal de production où peuvent figurer diverses statistiques, évolutions, tendances, etc...,
- enfin, l'appareil peut être couplé à des mémoires extérieures, par exemple des disques souples pour l'enregistrement des résultats obtenus, ce qui permet d'établir un fichier exhaustif des essais.

B 7427    RS

REVENDICATIONS

1. Circuit de calcul rapide de la transformée de Fourier discrète d'un signal délivré par un appareil de mesure, notamment par un appareil de contrôle non destructif par courants de Foucault, ce circuit comprenant :

- un convertisseur analogique-numérique (126) possédant une entrée qui reçoit le signal à traiter et une sortie qui délivre des échantillons numériques,

- une mémoire vive (128) du type à accès direct, dite mémoire d'acquisition,possédant une entrée de données (129) qui est reliée à la sortie du convertisseur (126), une entrée d'adressage (130) et une sortie de données (131),

- un ensemble (140) de calcul de la transformée de Fourier discrète, possédant une entrée reliée à la sortie de la mémoire d'acquisition (128) et une sortie délivrant la partie réelle et la partie imaginaire des harmoniques du signal, caractérisé en ce que cet ensemble (140) de calcul de la transformée de Fourier discrète comprend :

- une mémoire morte (152) de type programmable, dite mémoire de coefficients, à une entrée d'adressage (154) et une sortie de données (156), cette mémoire étant partagée en autant de blocs que d'harmoniques à calculer, le $k^{eme}$ bloc contenant les coefficients $\sin\frac{2\pi nk}{N}$ et $\cos\frac{2\pi nk}{N}$ où N est le nombre d'échantillons contenus dans la mémoire d'acquisition et où $\underline{n}$ prend toutes les valeurs allant de 0 à N-1,

- un compteur (132) possédant deux sorties véhiculant deux jeux d'adresses, la première sortie (136) étant reliée à l'entrée d'adressage (130) de la mémoire d'acquisition (128) et la seconde (137) à l'entrée d'adressage (154) de la mémoire de coefficients (152), ces adresses correspondant respectivement aux échantillons de la mémoire d'acquisition et aux coefficients d'un bloc de la mémoire de coefficients,

- un circuit multiplieur (160) possédant deux entrées (161, 162), l'une (161) reliée à la sortie (131) de la mémoire d'acquisition (128), l'autre (162) à la sortie (156) de la mémoire de coefficients (152), et une sortie (163),

- un circuit accumulateur (170) possédant une entrée (171) reliée à la sortie (163) du multiplieur (160) et une sortie (172) véhiculant les parties réelles et imaginaires recherchées,

- un circuit séquenceur (178) apte à transmettre des impulsions au compteur (132), à commander la lecture des échantillons dans la mémoire d'acquisition (128) et, simultanément, la lecture dans le premier bloc de la mémoire de coefficients (152) des coefficients $\cos\frac{2\pi n}{N}$ puis à commander à nouveau la lecture des échantillons dans la mémoire d'acquisition et simultanément la lecture dans le même premier bloc de la mémoire de coefficients des coefficients $\sin\frac{2\pi n}{N}$ et, à chaque lecture d'un échantillon et d'un coefficient à commander le multiplieur puis l'accumulateur, et à réitérer ces opérations avec le deuxième bloc de la mémoire de coefficients et ainsi de suite jusqu'au dernier.

2. Circuit selon la revendication 1, caractérisé en ce qu'il comprend en outre, relié à la sortie de l'accumulateur (170), un microprocesseur (190) de calcul mathématique apte à effectuer les opérations suivantes :

- élévation au carré des parties réelles et imaginaires qu'il reçoit de l'accumulateur,

- addition des carrés obtenus,
- extraction de la racine carrée de la somme obtenue,
- calcul du quotient de la partie imaginaire par la partie réelle,
- calcul de l'arctg du quotient obtenu.

3. Circuit selon la revendication 1, caractérisé en ce qu'il comprend un microprocesseur (150) ayant accès aux mémoires, au compteur, au multiplieur, à l'accumulateur et au séquenceur.

4. Circuit selon la revendication 1, caractérisé en ce que le multiplieur et l'accumulateur sont constitués par un seul et même circuit intégré (200).

FIG. 1

FIG. 2

0087357

FIG. 3

FIG. 4

4 / 6

0087357

FIG. 5

FIG. 6